# EUROPEAN PATENT APPLICATION

(11) **EP 4 738 578 A1**
(43) Date of publication of application: **06.05.2026**
(21) Application number: 25212263.5
(22) Date of filing: 30.10.2025
(51) Int. Cl.: H01M 50/262, H01M 50/251, H01M 50/207, H01M 50/296

(54) **EXTERNAL BATTERY FOR UPS**

(30) Priority: 30.10.2024 US 202418931449
(71) Applicant: Schneider Electric IT Corporation, Foxboro, MA 02035 (US)
(72) Inventor: CHEN, Chung-Hui, 11494 New Tapei City (TW); WU, Chia Pin, 201 Keelung City (TW); NAGABHUSHARAO, Pradeep Tolakanahalli, 560070 Bangalore (IN)
(74) Representative: Plasseraud IP

(57) **Abstract**

A battery cartridge assembly is configured to be positioned behind a UPS having a back side facing a first direction. The battery cartridge assembly includes a housing having a front side and a back side. The front side of the housing is configured to face the back side of the UPS when positioning the housing of the battery cartridge assembly behind the UPS. The battery cartridge assembly further includes a first connector provided on the back side of the housing. The first connector is configured to accept a UPS cable. The first connector faces the first direction. The battery cartridge assembly further includes a cutout in the housing. The cutout is configured to route a UPS cable between the UPS and the first connector.

## Description

### BACKGROUND OF DISCLOSURE

### 1. Field of Disclosure

This disclosure is directed to uninterruptible power supplies (UPSs), and more particularly to an external battery that is releasably connected to the UPS.

### 2. Discussion of Related Art

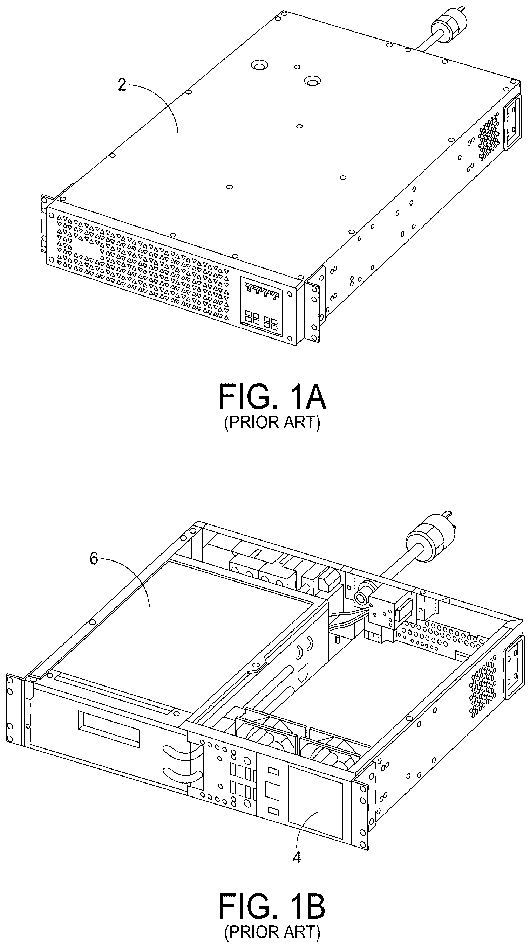

A typical UPS, indicated at 2 in FIG. 1A, is configured with components of the UPS and with a replacement battery cartridge that can be installed within the UPS. With the advent of ultra-high frequency and dual active bridge DC-DC power conversion topology and DSP control technologies within UPSs, the need to reduce the number and size of components is desired. This reduction in the number and size of components enables the shortening of an overall UPS chassis dimension. External batteries can be connected to the UPS to extend a run time of the UPS.

A modified UPS, indicated at 4 in FIG. 1B, in one exemplary embodiment, has a chassis of the UPS 4 reduced from a width of 641 millimeters (mm) to 450 mm, which is a 31% reduction in depth. Due to the short chassis depth, the size of a battery cartridge 6, e.g., a lead-acid battery cartridge, is reduced. The reduction in size of the UPS 4 and the battery cartridge 6 lessens run time of the UPS 4.

### SUMMARY OF DISCLOSURE

One aspect of the present disclosure is directed to a battery cartridge assembly configured to be positioned behind a UPS having a back side facing a first direction. In one embodiment, the battery cartridge assembly comprises a housing having a front side and a back side. The front side of the housing is configured to face the back side of the UPS when positioning the housing of the battery cartridge assembly behind the UPS. The battery cartridge assembly further comprises a first connector provided on the back side of the housing. The first connector is configured to accept a UPS cable. The first connector faces the first direction. The battery cartridge assembly further comprises a cutout in the housing. The cutout is configured to route a UPS cable between the UPS and the first connector.

Embodiments of the battery cartridge assembly further may include configuring the housing of the battery cartridge assembly to support one or more battery cells. The housing further may have a first side, a second side, a top side and a bottom side. The housing may have a height of 2 U defined by a distance between the top side and the bottom side of the housing. The UPS may include a second connector provided on the back of the chassis of the UPS. The UPS cable may be an overmolded, high power cable. The first side of the housing of the battery cartridge assembly may be configured to be secured to a first rail and the second side of the housing of the battery cartridge assembly may be configured to be secured to a second rail. The first rail may include a first tab configured to secure the first rail to a frame member of an IT equipment rack and the second rail may include a second tab configured to secure the second rail to the frame member of the IT equipment rack. The first rail and the second rail may be configured to be secured within a mounting slot of an IT equipment rack. The housing of the battery cartridge assembly may be positioned behind the UPS a predetermined space sufficient to allow airflow to exit the UPS. A thickness of the cutout may be greater than a thickness of the UPS cable.

Another aspect of the present disclosure is directed to a method of connecting a battery cartridge to a UPS. In one embodiment, the method comprises: positioning a battery cartridge behind a UPS within a mounting slot of an IT equipment rack, the battery cartridge including a housing having a front side and a back side, the back side of the housing of the battery cartridge facing a first direction and having a first connector, the UPS having a front and a back, the back facing the first direction and having a second connector, the front side of the housing being configured to face the back of the UPS when positioning the battery cartridge behind the UPS; and securing a UPS cable to the first connector provided on the back side of the housing and the second connector provided on the back of the UPS. The housing includes a cutout being configured to route the UPS cable between the UPS and the first connector of the housing of the battery cartridge and the second connector of the UPS.

Embodiments of the method further may include configuring the housing of the battery cartridge to support one or more battery cells. The housing further may have a first side, a second side, a top side and a bottom side. The housing may have a height of 2 U defined by a distance between the top side and the bottom side of the housing. The UPS cable may be an overmolded, high power cable. The method further may include securing the first side of the housing of the battery cartridge to a first rail and securing the second side of the housing of the battery cartridge to a second rail. The first rail may include a first tab configured to secure the first rail to a frame member of an IT equipment rack and the second rail may include a second tab configured to secure the second rail to the frame member of the IT equipment rack. The first rail and the second rail may be configured to be secured within a mounting slot of an IT equipment rack. The battery cartridge may be positioned behind the UPS a predetermined space sufficient to allow airflow to exit the UPS. A thickness of the cutout may be greater than a thickness of the UPS cable.

Yet another aspect of the present disclosure is directed to a power system comprising a UPS configured to provide backup power to a load. The UPS includes a chassis having a front, a back, a first side, a second side, a top and a bottom. The chassis has a height of 2U defined by a distance between the top and the bottom of the chassis. A back of the UPS faces in a first direction. The power system further comprises a battery cartridge configured to be positioned behind the UPS. The battery cartridge includes a housing configured to support one or more battery cells. The housing has a front side, a back side, a first side, a second side, a top side and a bottom side. The housing has a height of 2 U defined by a distance between the top side and the bottom side of the housing. The front side of the housing is configured to face the back of the UPS when positioning the battery cartridge behind the UPS. The power system further includes a first connector provided on the back side of the housing of the battery cartridge. The first connector faces the first direction. The power system further includes a UPS cable configured to connect to the UPS and to the first connector. The housing includes a cutout formed in the top side thereof. The cutout is configured to route a UPS cable between the UPS and the first connector.

Embodiments of the power system further may include configuring the UPS with a second connector provided on the back of the chassis of the UPS. The UPS cable may be an overmolded, high power cable. The power system further may include a first rail configured to be secured to the first side of the chassis of the UPS and the first side of the housing of the battery cartridge and a second rail configured to be secured to the second side of the chassis of the UPS and the second side of the housing of the battery cartridge. The first rail may include a first tab configured to secure the first rail to a frame member of an IT equipment rack and the second rail includes a second tab configured to secure the second rail to the frame member of the IT equipment rack. The first rail and the second rail may be configured to be secured within a mounting slot of an IT equipment rack. The battery cartridge may be positioned behind the UPS a predetermined space sufficient to allow airflow to exit the UPS. A thickness of the cutout may be greater than a thickness of the UPS cable.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1A is a perspective view of a UPS of a known design having a first depth;
FIG. 1B is a perspective view of a UPS of a known design having a second depth, which is less than the first depth;
FIG. 2 is a perspective view of a UPS including an external battery cartridge positioned behind the UPS positioned within a mounting slot of an IT equipment rack;
FIG. 3 is an enlarged perspective view of the UPS and the external battery cartridge connected to the UPS;
FIG. 4 is a top plan view of the UPS and the external battery cartridge connected to the UPS shown in FIG. 3;
FIG. 5 is a perspective view of the UPS and the external battery cartridge connected to the UPS, showing the UPS and the external battery cartridge secured to a side rail;
FIG. 6 is a perspective view of the external battery cartridge;
FIG. 7 is a perspective view of the external battery cartridge with a portion of a cover removed; and
FIG. 8 is a front view of the external battery cartridge.

### DETAILED DESCRIPTION

In one embodiment, a power system, such as a UPS, can be configured to receive an internal replacement battery cartridge and to connect an external battery cartridge. For example, the UPS can be configured to receive a lead-acid replacement battery cartridge and to connect to an external lead-acid battery cartridge or configured to receive a lithium-ion replacement battery cartridge and to connect to an external lithium-ion battery cartridge. Aspects of the present disclosure enable the UPS to be configured to connect with any type of battery, not just lithium-ion and lead-acid batteries. Further, although a UPS is shown and described herein, aspects of the present disclosure can apply to any type of power system, including but not limited to power strips and power distribution units.

Aspects of the present disclosure are directed to a housing of an external battery cartridge that fits behind an uninterruptible power supply (UPS). The external battery cartridge includes a connector configured to accept a UPS cable. The connector of the external battery cartridge and a connector of the UPS face in the same direction. The housing of the external battery cartridge has a cutout that is configured to route the UPS cable from a back facing surface of a chassis of the UPS including the UPS connector to a back facing surface of the housing of the external battery cartridge having the connector.

This disclosure is not limited in its application to the details of construction and the arrangement of components set forth in the following description or illustrated in the drawings. The principles set forth in this disclosure are capable of being provided in other embodiments and of being practiced or of being carried out in various ways. Also, the phraseology and terminology used herein is for the purpose of description and should not be regarded as limiting. The use of "including," "comprising," "having," 29 "containing," "involving," and variations thereof herein, is meant to encompass the items listed thereafter and equivalents thereof as well as additional items. When specific dimensions, quantities or magnitudes are provided they should be considered in reference to the specific embodiment referenced as they may be scaled to suit other embodiments.

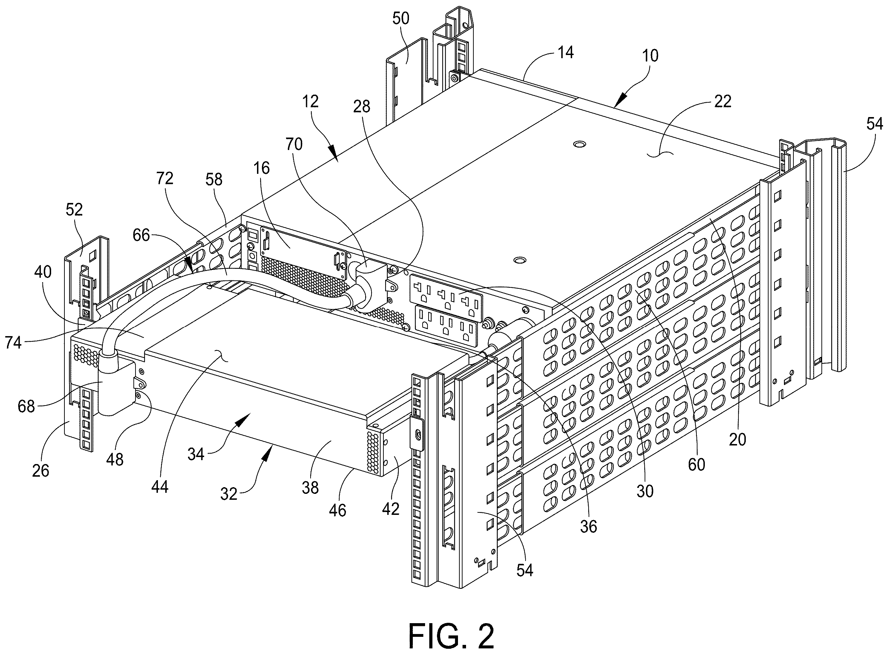

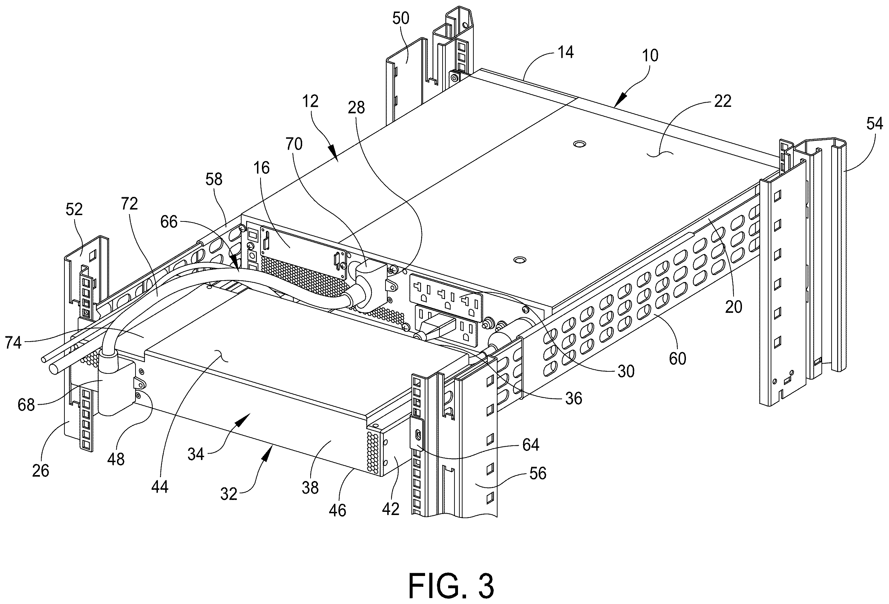

Referring to FIGS. 2 and 3, an uninterruptible power supply (UPS) is generally indicated at 10. The UPS 10 is constructed in a manner similar to the UPS 4 shown in FIG. 1B. As is known, a UPS provides back-up power to a load when the main power source to the UPS fails. The UPS 10 is configured to provide instantaneous or nearly instantaneous power to the load. During normal operation, the UPS 10 receives power from an external source, such as mains power. In other embodiments, as described below with reference to an external battery cartridge, the UPS 10 can be configured to receive power from an external battery. In the event of failure of power from mains power and external battery power, the UPS 10 further can be configured with one or more internal batteries, sometimes referred to as battery packs, battery cartridges or replacement battery cartridges, connected to the UPS 10. In some embodiments, the replacement battery cartridge can embody a lead-acid replacement battery cartridge or a lithium-ion replacement battery cartridge. The replacement battery cartridge is configured to be inserted into the UPS 10. The UPS 10 further may include integrated surge protection to protect the load from voltage spikes.

The UPS 10 further can be configured to include an external battery connector that is configured to connect to an external battery cartridge. As noted above, the external battery cartridge is connected to the UPS 10 by the external battery connector to provide power to the UPS 10 in the event of failure of power from mains power. In one embodiment, the external battery cartridge can be a lead-acid external battery and the external battery connector can be specially configured to connect the lead-acid external battery cartridge to the mating external battery connector of the UPS 10. In another embodiment, the external battery cartridge can be a lithium-ion external battery and the external battery connector can be specially configured to connect the lithium-ion external battery to the mating external battery connector of the UPS 10. Aspects of the present disclosure are directed to connecting the external battery cartridge to the UPS 10.

The UPS 10 includes a chassis, generally indicated at 12, having a front 14, a back 16, a first side 18, a second side 20, a top 22, and a bottom. As shown, the chassis 12 is a rectangular-cuboid structure that is shaped and sized to fit within a mounting slot, such as a mounting slot of an IT equipment rack. In one embodiment, the chassis 12 has a thickness, i.e., a distance between the top 22 and the bottom of the chassis 12, of 2 rack units (U), which is known to be 3.5 inches (in) (2 X 1 U of 1.75 in). A portion of the IT equipment rack 26 is shown in FIG. 2. The interior of the chassis 12 of the UPS 10 is configured to support the internal components of the UPS 10, including operational components of the UPS, a replacement battery cartridge and a controller configured to control the operation of the UPS 10. As shown, the back 16 of the UPS 10 includes a UPS connector 28, which is provided to connect the UPS 10 to an external battery. The back 16 of the UPS 10 further includes other connectors, which are together indicated at 30 and configured to provide power to electrical components supported by the IT equipment rack 26, e.g., servers. In one embodiment, the connectors 30 include receptacles, each being configured to receive a plug-in cable.

As shown, embodiments of the present disclosure are directed to an external battery cartridge, generally indicated at 32, which is positioned behind or in back of the UPS 10 within the mounting slot of the IT equipment rack 26. As with the UPS 10, the external battery cartridge 32 is shaped and sized to fit within the mounting slot of the IT equipment rack 26. The external battery cartridge 32 may be a lead-acid battery or a lithium-ion battery, which is a battery including lead-acid battery cells or lithium-ion battery cells, respectively, configured to generate power.

In the shown embodiment, the external battery cartridge includes a housing, generally indicated at 34, having a rectangular-cuboid body. The housing 34 of the external battery cartridge includes a front side 36, a back side 38, a first side 40, a second side 42, a top side 44, and a bottom side 46. As with the UPS 10, the housing 34 of the external battery cartridge 32 has a thickness, i.e., a distance between the top side 44 and the bottom side 46, of 2 U or less. As will be described in greater detail below, the back side 38 of the housing 34 of the external battery cartridge 32 includes an external battery cartridge connector 48. The external battery cartridge connector 48 is configured to electrically (and mechanically) connect to the external battery cartridge 32 to the UPS connector 28 of the UPS 10.

As described above, the UPS connector 28 of the UPS 10 is provided on the back 16 of the chassis 12 of the UPS 10 and the external battery cartridge connector 48 of the external battery cartridge 32 is provided on the back side 38 of the housing 34 of the external battery cartridge 32. The directions of the UPS connector 28 and the external battery cartridge connector 48 are sometimes referred to as a first direction. In the shown embodiment, the first direction faces toward a back of the IT equipment rack 26. The arrangement is such that the UPS connector 28 of the UPS 10 can be particularly configured to mate with the external battery cartridge connector 48 of the external battery cartridge 32. For example, the UPS connector 28 can be configured to detect the type of external battery cartridge connected to the UPS 10. In one embodiment, the UPS 10 can be configured to distinguish the type of external battery cartridge connected to the UPS by a signal communicated through the UPS connector 28. As noted above, although not shown, the UPS 10 further can include an internal replacement battery cartridge to provide backup power to the UPS 10. The external battery cartridge 32 is selected to match the type of replacement battery cartridge, e.g., a lead-acid external battery cartridge or a lithium-ion external battery cartridge. In one embodiment, the external battery cartridge 32 and the replacement battery cartridge can be connected in parallel within the UPS 10.

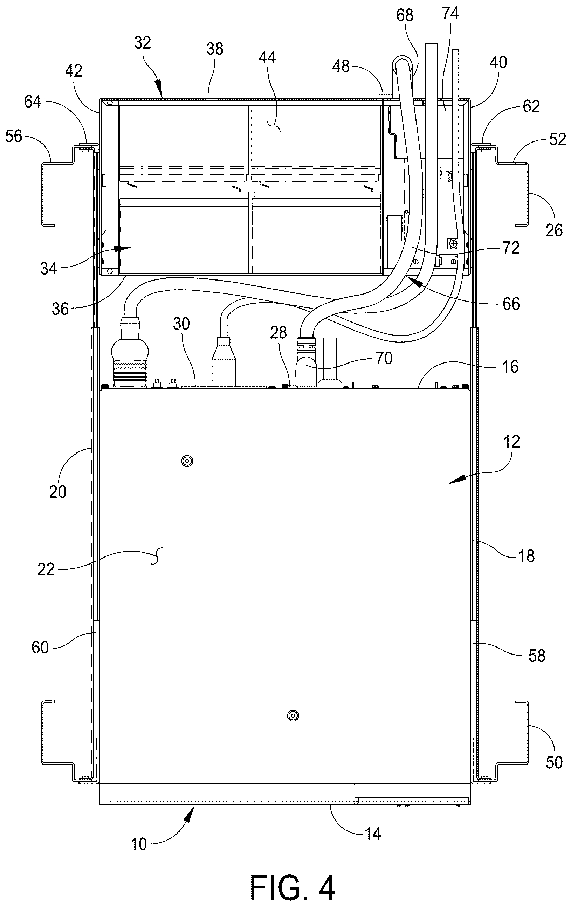

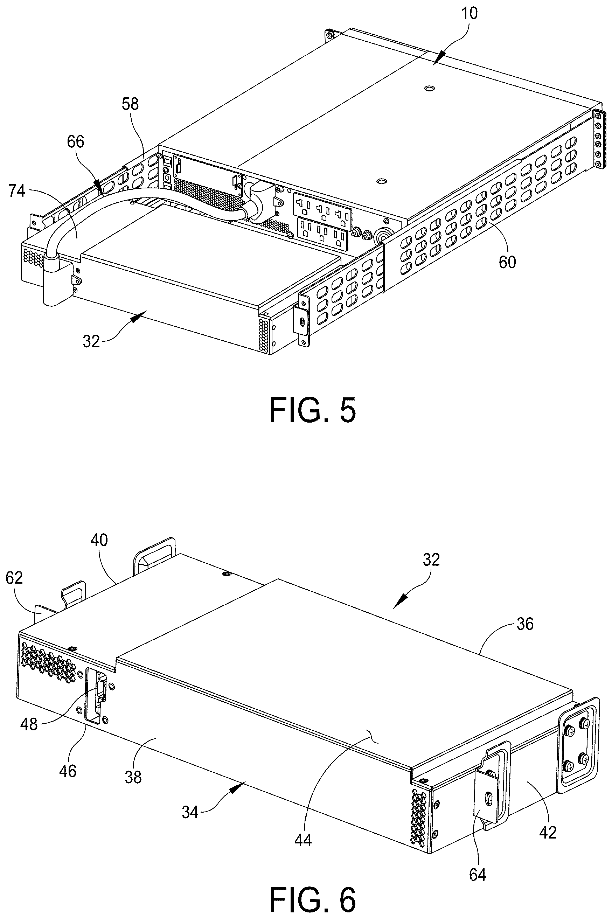

Referring to additionally to FIGS. 4 and 5, the chassis 12 of the UPS 10 is secured to the frame members of the IT equipment rack 26 within a mounting slot of the IT equipment rack 26. As shown, there are four upright frame members, indicated at 50, 52, 54, 56, which are positioned at the corners of the IT equipment rack 26. In one embodiment, a first rail 58 is provided to secure the first side 18 of the chassis 12 of the UPS 10 to frame members 50, 52. The first rail 58 embodies a two-part, elongated body that is perforated to enable fasteners, such as machine screw fasteners, to secure the chassis 12 of the UPS 10 to the frame members 50, 52. A first part of the elongated body of the first rail 58 is configured to slidably receive a second part of the elongated body of the first rail 58 to extend and retract the first rail 58. A front end of the first rail 58 includes a tab portion that enables the first rail 58 to be secured to frame member 50. A back end of the first rail 58 is suitably secured to frame member 52.

Similarly, a second rail 60 is provided to secure the second side 20 of the chassis 12 to frame members 54, 56. The second rail 60 embodies a two-part, elongated body that is perforated to enable fasteners to secure the chassis 12 of the UPS 10 to the frame members 54, 56. A first part of the elongated body of the second rail 60 is configured to slidably receive a second part of the elongated body of the second rail 60 to extend and retract the second rail 60. A front end of the second rail 60 includes another tab portion that enables the second rail 60 to be secured to frame member 54. A back end of the second rail 60 is suitably secured to frame member 56.

The housing 34 of the external battery cartridge 32 is secured to the frame members 50, 52, 54, 56 of the IT equipment rack 26 within the mounting slot of the IT equipment rack 26 behind the UPS 10. The first rail 58 further is configured to secure the first side 40 of the housing 34 of the external battery cartridge 32 to frame members 50, 52. As noted above, the front end of the first rail 58 is secured to the frame member 50 of the IT equipment rack 26 and the back end of the first rail 58 is secured to frame member 52 of the IT equipment rack 26. The first side 40 of the housing 34 of the external battery cartridge 32 is secured to the first rail 58 by fasteners, e.g., machine screw fasteners. The housing 34 of the external battery cartridge 32 further is secured to the frame member 52 by a first tab 62 that extends perpendicularly from the first side 40 of the housing 34 by a fastener, e.g., a machine screw fastener. The first tab 62 includes an opening formed therein to allow the fastener to extend through the first tab 62.

Similarly, as noted above, the front end of the second rail 60 is secured to the frame member 54 of the IT equipment rack 26 and the back end of the second rail 60 is secured to the frame member 56 of the IT equipment rack 26. The second side 42 of the housing 34 of the external battery cartridge 32 is secured to the second rail 60 by fasteners, e.g., machine screw fasteners. The housing 34 of the external battery cartridge 32 further is secured to the frame member 56 by a second tab 64 that extends perpendicularly from the second side 42 of the housing 34 by a fastener, e.g., a machine screw fastener. The second tab 64 includes an opening formed therein to allow the fastener to extend through the second tab 64.

The two-part elongated body of the first rail 58 and the two-part elongated body of the second rail 60 each have a height that is 2 U or less so it can fit within the mounting slot of the IT equipment rack 26. The slidable nature of the first rail 58 and the second rail 60 enables the external battery cartridge 32 to be slid to and from the UPS 10 prior to using the first and second tabs 62, 64 to secure the housing 34 of the external battery cartridge 32 to frame members 52, 56. The housing 34 of the battery cartridge 32 is positioned behind the UPS 10 a predetermined space sufficient to allow airflow to exit the UPS 10. Also, as will be described below, the space allows a cable to be connected to the external battery cartridge connector 48 provided on the back side 38 of the housing 34 of the external battery cartridge 32, as well as other cables connected to the UPS 10. The space can be selected based on the type of connector used to connect the external battery cartridge 32 to the UPS 10.

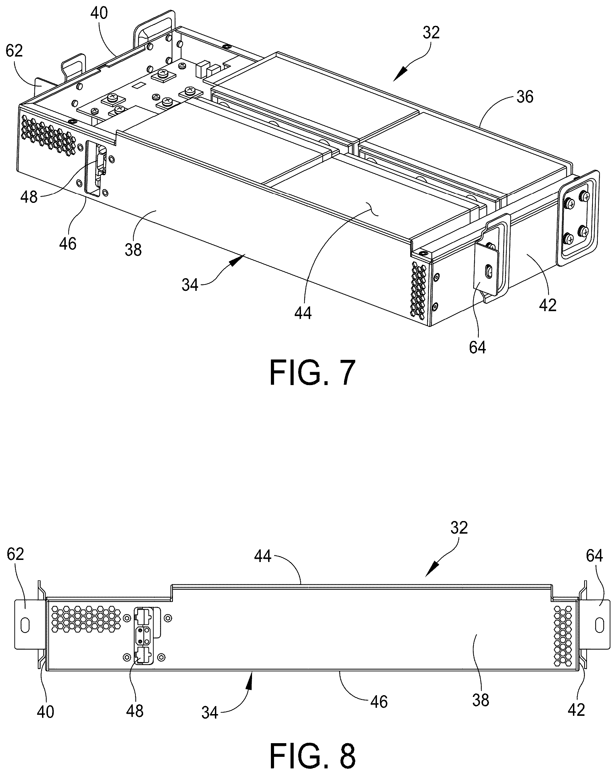

Referring additionally to FIGS. 6-8, the back side 38 of the housing 34 of the external battery cartridge 32 that includes the external battery cartridge connector 48 sometimes may be referred to as a first connector. The back 16 of the chassis 12 of the UPS 10 that includes the UPS connector 28 sometimes may be referred to as a second connector. As noted above, both the external battery cartridge connector 48 and the UPS connector 28 face in the first direction. In this instance, the external battery cartridge connector 48 and the UPS connector 28 face toward a back of the IT equipment rack 26. A UPS cable, generally indicated at 66, is provided to connect the external battery cartridge 32 to the UPS 10. As shown, the UPS cable 66 includes a first plug 68, a second plug 70, and a cable portion 72 connecting the first plug 68 to the second plug 70. In one embodiment, the UPS cable 66 is an overmolded, high power cable. The arrangement is such that the external battery cartridge connector 48 is configured to accept the first plug 68 of a UPS cable 66 and the UPS connector 28 of the UPS 10 is configured to accept a second plug 70 of the UPS cable 66, with the cable portion 72 of the UPS cable 66 spanning a distance from the back 16 of the chassis 12 of the UPS 10 to the back side 38 of the housing 34 of the external battery cartridge 32. When the UPS cable 66 is connected to the external battery cartridge connector 48 of the external battery cartridge 32 and the UPS connector 28 of the UPS 10, backup battery power is provided by the external battery cartridge 32 to the UPS 10.

To accommodate a thickness of the cable portion 72 of the UPS cable 66, the housing 34 of the external battery cartridge 32 includes a cutout 74, which is configured to route the cable portion 72 of the UPS cable 66 from the UPS connector 28 of the UPS 10 to the external battery cartridge connector 48 of the external battery cartridge 32. As shown, the cutout 74 is formed in the top side 44 of the housing 34 of the external battery cartridge 32 toward the first side 40 of the housing 34 having the first tab 62. It should be noted that the cutout can be formed in the top side 44 of the housing 34 of the external battery cartridge 32 toward the second side 42 of the housing 34 or in the middle of the housing 34. As shown, the cutout 72 has a thickness that is greater than a thickness of the cable portion 72 of the UPS cable 66. The provision of the cutout 72 formed in the housing 34 of the external battery cartridge 32 enables an external battery cartridge assembly, which includes the external battery cartridge 32 and the UPS cable 66, to achieve the 2 U height standard.

The UPS 10 includes the reduced size chassis dimension described above. The UPS 10 is configured to connect to the housing 34 of the external battery cartridge 32, which is shaped and sized to fit behind the UPS 10. The dimensions of the housing 32 of the external battery cartridge 32 may be selected based on the space available behind the UPS 10. The back side 38 of the housing 34 of the external battery cartridge 32 includes the external battery cartridge connector or first connector 48 that is configured to accept the UPS cable 66 to connect the UPS 10 to the external battery cartridge 32. As noted, the external battery cartridge connector 48 provided on the back side 38 of the housing 34 faces in the first direction. The back 16 of the chassis 12 of the UPS 10 includes the UPS connector or the second connector 28. The back 16 of the chassis 12 of the UPS 10 also faces in the first direction. The housing 34 of the external battery cartridge 32 further includes the cutout 74 in the housing 32 to enable the cable portion 72 of the UPS cable 66 to pass from the UPS connector 28 to the external battery cartridge connector 48 over the housing 34 of the external battery cartridge 32.

In some embodiments, an additional battery string of additional external batteries can be provided to increase a battery run time of the UPS 10.

In some embodiments, the external battery cartridge 32 can be mounted with the same rail kit of UPS 10.

In some embodiments, the external battery cartridge 32 of the present disclosure provides extra run time with an additional battery cartridge to extend the run time of the UPS 10. The external battery cartridge 32 of embodiments of the present disclosure provides a solution to extending the run time of the UPS 10. The external battery cartridge 32 typically occupies another IT server rack U height space. Reference to a "zero U height" external battery cartridge is directed positioning the external battery cartridge 32 behind the UPS 10, thus saving the U space above and/or below the UPS 10. The zero U height external battery cartridge 32 of embodiments of the present disclosure is positioned behind the UPS 10 thereby utilizing the same U space as the UPS 10.

In some embodiments, although the chassis 12 of the UPS 10 and the housing 34 of the external battery cartridge 32 have a 2 U height, it should be noted that the U height of these components may embody a different thickness, e.g., 3 U height. Also, the cutout 74 may be formed in the top side 44 of the housing 34 of the external battery cartridge 32 to have smaller or larger depths to accommodate the thickness of the cable portion 72 of the UPS cable 66.

In some embodiments, more than one external battery cartridge 32 may be positioned behind the chassis 12 of the UPS 10. The back 16 of the chassis 12 of the UPS 10 may be configured to include additional UPS connectors to accommodate additional external battery cartridges.

In some embodiments, the type of connectors and cables used to connect the UPS 10 to the external battery cartridge 32 may be selected to optimize the performance of the UPS 10 and to transmit power from the external battery cartridge 32 to the UPS 10.

Another aspect of the present disclosure is directed to a method of connecting the external battery cartridge 32 to the UPS 10. In one embodiment, the method includes positioning the external battery cartridge 32 behind the chassis 12 of the UPS 10 within the mounting slot of the IT equipment rack 26, securing the UPS cable 66 to the first connector 48 provided on the back side 38 of the housing 34 of the external battery cartridge 32 and the second connector 28 provided on the back 16 of the chassis 12 of the UPS 10. As noted above, the housing 34 includes the cutout 74, which is configured to route the cable portion 72 of the UPS cable 66 between the first connector 48 of the external battery cartridge 32 and the second connector 28 of the UPS 10 over the external battery cartridge 32.

The method further includes securing the first side 40 of the housing 34 of the external battery cartridge 32 to the first rail 58 and securing the second side 42 of the housing 34 of the external battery cartridge 32 to the second rail 60.

Various controllers may execute various operations discussed herein. Using data stored in associated memory and/or storage, the controllers may also execute one or more instructions stored on one or more non-transitory computer-readable media that may result in manipulated data. In some examples, the controllers may include one or more processors or other types of controllers. In one example, the controllers are or include a commercially available, general-purpose processor. In another example, the controllers perform at least a portion of the operations discussed above using an application-specific integrated circuit tailored to perform particular operations in addition to, or in lieu of, a general-purpose processor. As illustrated by these examples, examples in accordance with the present invention may perform the operations described herein using many specific combinations of hardware and software and the invention is not limited to any particular combination of hardware and software components.

Having thus described several aspects of at least one embodiment of this disclosure, it is to be appreciated various alterations, modifications, and improvements can readily occur to those skilled in the art. Such alterations, modifications, and improvements are intended to be part of this disclosure, and are intended to be within the spirit and scope of the disclosure. Accordingly, the foregoing description and drawings are by way of example only.

## Claims

1. A battery cartridge assembly configured to be positioned behind a UPS having a back side facing a first direction, the battery cartridge assembly comprising:
a housing having a front side and a back side, the front side of the housing being configured to face the back side of the UPS when positioning the housing of the battery cartridge assembly behind the UPS;
a first connector provided on the back side of the housing, the first connector being configured to accept a UPS cable, the first connector facing the first direction; and
a cutout in the housing, the cutout being configured to route a UPS cable between the UPS and the first connector.

2. The battery cartridge assembly of claim 1, wherein the housing further has a first side, a second side, a top side and a bottom side, wherein the housing has a height of 2 U defined by a distance between the top side and the bottom side of the housing.

3. The battery cartridge assembly of claims 1 or 2, wherein the UPS includes a second connector provided on the back of the chassis of the UPS, wherein the UPS cable is an overmolded, high power cable.

4. The battery cartridge assembly of any one of claims 1 to 3, wherein the first side of the housing of the battery cartridge assembly is configured to be secured to a first rail and the second side of the housing of the battery cartridge assembly is configured to be secured to a second rail.

5. The battery cartridge assembly of claim 4, wherein the first rail includes a first tab configured to secure the first rail to a frame member of an IT equipment rack and the second rail includes a second tab configured to secure the second rail to the frame member of the IT equipment rack.

6. The battery cartridge assembly of claim 4 or 5, wherein the first rail and the second rail are configured to be secured within a mounting slot of an IT equipment rack.

7. The battery cartridge assembly of any one of claims 1 to 6, wherein the housing of the battery cartridge assembly is positioned behind the UPS a predetermined space sufficient to allow airflow to exit the UPS.

8. A method of connecting a battery cartridge to a UPS, the method comprising:
positioning a battery cartridge behind a UPS within a mounting slot of an IT equipment rack, the battery cartridge including a housing having a front side and a back side, the back side of the housing of the battery cartridge facing a first direction and having a first connector, the UPS having a front and a back, the back facing the first direction and having a second connector, the front side of the housing being configured to face the back of the UPS when positioning the battery cartridge behind the UPS; and
securing a UPS cable to the first connector provided on the back side of the housing and the second connector provided on the back of the UPS,
wherein the housing includes a cutout being configured to route the UPS cable between the UPS and the first connector of the housing of the battery cartridge and the second connector of the UPS.

9. The method of claim 8, wherein the housing further has a first side, a second side, a top side and a bottom side, the housing having a height of 2 U defined by a distance between the top side and the bottom side of the housing.

10. The method of claim 9, further comprising securing the first side of the housing of the battery cartridge to a first rail and securing the second side of the housing of the battery cartridge to a second rail.

11. The method of claim 10, wherein the first rail includes a first tab configured to secure the first rail to a frame member of an IT equipment rack and the second rail includes a second tab configured to secure the second rail to the frame member of the IT equipment rack.

12. The method of claim 9 or 10, wherein the first rail and the second rail are configured to be secured within a mounting slot of an IT equipment rack.

13. A power system, comprising:
a UPS configured to provide backup power to a load, the UPS including a chassis having a front, a back, a first side, a second side, a top and a bottom, the chassis having a height of 2U defined by a distance between the top and the bottom of the chassis, a back of the UPS facing in a first direction;
a battery cartridge configured to be positioned behind the UPS, the battery cartridge including a housing configured to support one or more battery cells, the housing having a front side, a back side, a first side, a second side, a top side and a bottom side, the housing having a height of 2 U defined by a distance between the top side and the bottom side of the housing, the front side of the housing being configured to face the back of the UPS when positioning the battery cartridge behind the UPS;
a first connector provided on the back side of the housing of the battery cartridge, the first connector facing the first direction; and
a UPS cable configured to connect to the UPS and to the first connector,
wherein the housing includes a cutout formed in the top side thereof, the cutout being configured to route a UPS cable between the UPS and the first connector.

14. The power system of claim 13, further comprising a first rail configured to be secured to the first side of the chassis of the UPS and the first side of the housing of the battery cartridge and a second rail configured to be secured to the second side of the chassis of the UPS and the second side of the housing of the battery cartridge.

15. The power system of claim 14, wherein the first rail includes a first tab configured to secure the first rail to a frame member of an IT equipment rack and the second rail includes a second tab configured to secure the second rail to the frame member of the IT equipment rack.
